(19) Europäisches Patentamt
European Patent Office
Office européen des brevets

(11) EP 3 842 492 A1

(12) EUROPEAN PATENT APPLICATION
published in accordance with Art. 153(4) EPC

(43) Date of publication:
**30.06.2021 Bulletin 2021/26**

(21) Application number: **19852483.7**

(22) Date of filing: **21.08.2019**

(51) Int Cl.:
***C08L 71/00*** *(2006.01)* ***C08K 3/011*** *(2018.01)*
***C08K 3/06*** *(2006.01)* ***C08K 5/14*** *(2006.01)*
***C08L 71/03*** *(2006.01)* ***C08L 101/00*** *(2006.01)*

(86) International application number:
**PCT/JP2019/032681**

(87) International publication number:
**WO 2020/040215 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **22.08.2018 JP 2018155242**

(71) Applicant: **Osaka Soda Co., Ltd.**
**Osaka-shi**
**Osaka 550-0011 (JP)**

(72) Inventors:
- **UNO, Kazuki**
  **Osaka-shi, Osaka 550-0011 (JP)**
- **KITAGAWA, Motoki**
  **Osaka-shi, Osaka 550-0011 (JP)**
- **FUNAYAMA, Toshiyuki**
  **Osaka-shi, Osaka 550-0011 (JP)**

(74) Representative: **Müller-Boré & Partner Patentanwälte PartG mbB**
**Friedenheimer Brücke 21**
**80639 München (DE)**

# (54) RESIN-CONTAINING RUBBER COMPOSITION

(57) In a covering tube for an electric wire, for example, a material having excellent tensile stress in normal-state physical properties and hot physical properties has been demanded. The object of the present invention is to solve such a problem by a resin-containing rubber composition comprising a polyether-based polymer (a) and a thermoplastic resin powder (b), and a rubber material made from the resin-containing rubber composition.



Printed by Jouve, 75001 PARIS (FR)

## Description

TECHNICAL FIELD

The present invention relates to a resin-containing rubber composition containing a polyether polymer and also to a rubber material made from the resin-containing rubber composition.

BACKGROUND ART

Generally, polyether polymers such as epichlorohydrin-based polymers are crosslinked and thus widely used as materials excellent in various physical properties. For automotive applications, they have been used as fuel hose, air-system hose, and tube materials.

Meanwhile, utilizing their semi-conductive characteristics, polyether polymers such as epichlorohydrin-based polymers have been used for charging rolls, transfer rolls, and developing rolls for use in the contact charging system. In recent years, for charging, transfer, or developing in the electrophotographic process used in copiers and printers, the contact charging system using a rubber roller has been increasingly employed in place of the non-contact charging system and the non-contact transfer system as represented by corona discharge.

In addition, it has also been proposed to blend a resin with a polyether polymer to use (see Patent Document 1).

PRIOR ART DOCUMENT

PATENT DOCUMENT

Patent Document 1: WO 2015/133610

SUMMARY OF THE INVENTION

PROBLEMS TO BE SOLVED BY THE INVENTION

In the kneading of polymers such as the kneading of a polyether polymer and a resin, when more than a certain amount of a resin is contained, the resulting tensile stress is poor. Thus, it has been difficult to obtain physical properties necessary for a rubber material.

In a covering tube for an electric wire, for example, a material having excellent tensile stress in normal-state physical properties and hot physical properties has been demanded. The object of the present invention is to solve such a problem.

SOLUTIONS TO THE PROBLEMS

The inventors of the present invention have found that the above problem can be solved by a resin-containing rubber composition comprising a polyether-based polymer (a) and a thermoplastic resin powder (b) and also by a rubber material prepared using the resin-containing rubber composition, and thus accomplished the present invention.

The present invention relates to the following.

[1] A resin-containing rubber composition comprising a polyether-based polymer (a) and a thermoplastic resin powder (b).

[2] The resin-containing rubber composition according to [1], wherein the thermoplastic resin powder (b) has an average particle diameter of less than 500 μm.

[3] The resin-containing rubber composition according to [1] or [2], wherein in the thermoplastic resin powder (b), particles of 300 μm or more account for 20 mass% or less.

[4] The resin-containing rubber composition according to any one of [1] to [3], further comprising a crosslinking agent (c).

[5] The resin-containing rubber composition according to any one of [1] to [4], wherein the polyether-based polymer (a) contains, as structural units, at least two units selected from ethylene oxide unit, propylene oxide unit, epichlorohydrin unit, and allyl glycidyl ether unit.

[6] The resin-containing rubber composition according to any one of [1] to [5], wherein the thermoplastic resin powder (b) has a melting point of 120°C or more.

[7] The resin-containing rubber composition according to any one of [4] to [6], wherein the crosslinking agent (c) is at least one selected from the group consisting of a polyamine-based crosslinking agent, a thiourea-based crosslinking agent, a thiadiazole-based crosslinking agent, a mercaptotriazine-based crosslinking agent, a pyrazine-based crosslinking agent, a quinoxaline-based crosslinking agent, a bisphenol-based crosslinking agent, a peroxide-based crosslinking agent, and a sulfur-based crosslinking agent.

[8] A rubber material made from the resin-containing rubber composition according to any one of [1] to [7].

[9] A method for producing the resin-containing rubber composition according to any one of [1] to [7], the method comprising kneading the polyether-based polymer (a) and the thermoplastic resin powder (b) at a temperature equal to or lower than a melting point of the thermoplastic resin powder (b).

EFFECT OF THE INVENTION

The rubber material prepared using the resin-containing rubber composition of the present invention is a material having excellent tensile stress in normal-state physical properties and hot physical properties. The rubber material is particularly suitable for use as fuel hose, air-system hose, and tube materials for automotive applications, materials for semi-conductive rollers and belts for developing, charging, and transfer in the electrophotographic process for OA applications such as copiers and printers, and also covering tubes for electric wires.

MODE FOR CARRYING OUT THE INVENTION

Hereinafter, the present invention will be described in detail.

The rubber composition of the present invention is a resin-containing rubber composition comprising a polyether-based polymer (a) and a thermoplastic resin powder (b).

The polyether-based polymer (rubber) used in the present invention is preferably a homopolymer or copolymer of a compound selected from alkylene oxides such as ethylene oxide, propylene oxide, and n-butylene oxide, glycidyls such as methyl glycidyl ether, ethyl glycidyl ether, n-glycidyl ether, allyl glycidyl ether, and phenyl glycidyl ether, epihalohydrins such as epichlorohydrin and epibromohydrin, styrene oxides, and the like. These homopolymer and copolymer can be used alone or in combination of two or more.

As the polyether-based polymer, Mode 1 containing an epichlorohydrin unit is preferable. Incidentally, "epichlorohydrin unit" means a structural unit based on epichlorohydrin.

In addition, Mode 2 containing at least two units selected from epichlorohydrin unit, propylene oxide unit, ethylene oxide unit, and allyl glycidyl ether unit is also preferable. In either of Mode 1 and Mode 2, it is more preferable that at least ethylene oxide and epichlorohydrin units are contained, and it is particularly preferable that at least epichlorohydrin, ethylene oxide, and allyl glycidyl ether units are contained.

The polyether-based polymer preferably contains ethylene oxide and epichlorohydrin units in a total amount of 85 mol% or more, and more preferably 90 mol% or more, relative to all the polymerized units of the polyether-based polymer.

The polyether-based polymer preferably contains a structural unit based on ethylene oxide in an amount of 4 to 89 mol%, more preferably 24 to 79 mol%, and particularly preferably 34 to 74 mol%, relative to all the polymerized units.

The polyether-based polymer preferably contains a structural unit based on allyl glycidyl ether in an amount of 1 to 15 mol%, more preferably 1 to 12 mol%, and particularly preferably 1 to 10 mol%, relative to all the polymerized units.

The polyether-based polymer preferably contains a structural unit based on epichlorohydrin in an amount of 10 to 95 mol%, more preferably 20 to 75 mol%, and particularly preferably 25 to 65 mol%, relative to all the polymerized units.

The polymer composition of epichlorohydrin homopolymer, epichlorohydrin-ethylene oxide copolymer, or epichlorohydrin-ethylene oxide-allyl glycidyl ether terpolymer is gained through the chlorine content therein and the iodine value thereof.

The chlorine content is measured by potentiometric titration method according to the method described in JIS K7229. From the obtained chlorine content, the molar fraction of the structural unit derived from epichlorohydrin is calculated.

The iodine value is measured in accordance with JIS K6235. From the obtained iodine value, the molar fraction of the structural unit derived from allyl glycidyl ether is calculated.

The molar fraction of the structural unit derived from ethylene oxide is calculated from the molar fraction of the structural unit derived from epichlorohydrin and the molar fraction of the structural unit derived from allyl glycidyl ether.

In the resin-containing rubber composition of the present invention, the polyether-based polymer (a) may be contained alone or may be contained with rubber species other than the polyether-based polymer, as a rubber component. As the rubber other than the polyether-based polymer, natural rubber and synthetic rubber can be mentioned. Examples of the synthetic rubber include isoprene rubber (IR), 1,2-polybutadiene (VBR), styrene butadiene rubber (SBR), butyl rubber (IIR), ethylene propylene rubber (EPM), ethylene propylene diene rubber (EPDM), chloroprene rubber (CR), chlorosulfonated polyethylene (CSM), chlorinated polyethylene (CPE), acrylic rubber (ACM), acrylonitrile butadiene

rubber (NBR), and hydrogenated acrylonitrile butadiene rubber (H-NBR). The synthetic rubber is preferably at least one selected from the group consisting of ethylene propylene diene rubber (EPDM), chloroprene rubber (CR), and acrylonitrile butadiene rubber (NBR).

In the resin-containing rubber composition of the present invention, when the total amount of the rubber component is taken as 100 mass%, the polyether-based polymer is preferably contained in an amount of 10 mass% or more, more preferably 30 mass% or more, particularly preferably 70 mass% or more, and most preferably 90 mass% or more (particularly 90 to 100 mass%).

In the case where the rubber other than the polyether-based polymer is contained as rubber components in the resin-containing rubber composition of the present invention, it is preferable that the polyether-based polymer is contained in an amount of 10 to 90 mass%, and the rubber other than the polyether-based polymer is contained in an amount of 90 to 10 mass%, it is more preferable that the polyether-based polymer is contained in an amount of 30 to 90 mass%, and the rubber other than the polyether-based polymer is contained in an amount of 70 to 10 mass%, and it is particularly preferable that the polyether-based polymer is contained in an amount of 70 to 90 mass%, and the rubber other than the polyether-based polymer is contained in an amount of 30 to 10 mass%, in the rubber components.

Examples of the thermoplastic resin powder (b) include powders of an ionomer, isobutylene-maleic anhydride copolymer, acrylonitrile-butadiene-styrene resin (ABS), acrylonitrile-chlorinated polyethylene-styrene resin (ACS), acrylonitrile-ethylene-propylene-diene-styrene resin (AES), acrylonitrile-styrene resin (AS), acrylate-styrene-acrylonitrile resin (ASA), methyl methacrylate-butadiene-styrene resin (MBS), ethylene-vinyl chloride copolymer, ethylene-vinyl acetate copolymer, modified ethylene-vinyl acetate copolymer, ethylene-vinyl alcohol copolymer, chlorinated polyvinyl chloride, chlorinated polyethylene, carboxyvinyl polymer, ketone resin, brominated polystyrene, amorphous copolyester, norbornene resin, polytetrafluoroethylene, perfluoroethylene-propylene copolymer, perfluoroalkoxy alkane (PFA), polychlorotrifluoroethylene, ethylene-tetrafluoroethylene copolymer, polyvinylidene fluoride, polyvinyl fluoride, polyacetal, polyamide 6, polyamide 66, polyamide 610, polyamide 612, polyamide 11, copolyamide, polyamide MXD6, polyamide 46, methoxymethylated polyamide, special heat-resistant polyamide glass fiber-reinforced plastic, polyamideimide, polyarylate, thermoplastic polyimide, polyetherimide, polyetheretherketone, polyethylene, polyethylene oxide, polyethylene terephthalate, polyethylene naphthalate, polyvinylidene chloride, polyvinyl chloride, polycarbonate, polycyclohexylenedimethylene terephthalate, polystyrene, polyethersulfone, polyparavinyl phenol, polyvinyl alcohol, polyvinyl butyral, polyvinyl formal, polyphenylene ether, polyphenylene sulfide, polybutylene terephthalate, polypropylene, polymethylpentene, polymethyl methacrylate, and liquid crystal polymer.

The thermoplastic resin powder (b) is preferably a powder of at least one selected from thermoplastic resins having melting point of 120°C or more. When the melting point of the thermoplastic resin powder (b) is 120°C or more, the hot physical properties can be further improved. The upper limit of the melting point is not particularly limited, and may be 280°C or less. Incidentally, as used herein, a melting point indicates the peak temperature of the melting point measured by a DSC method in which the temperature is raised at 10°C/min from 20°C to 300°C. The thermoplastic resin having a melting point of 120°C or more is more preferably at least one selected from the group consisting of polyethylene, polypropylene, polyethylene terephthalate, polyvinyl alcohol, polyvinylidene chloride, polyvinylidene fluoride, polyamide 6, polyamide 66, polyacetal, polycarbonate, polybutylene terephthalate, polyphenylene sulfide, polyetherimide, polytetrafluoroethylene, polychlorotrifluoroethylene, and polyamideimide, particularly preferably at least one selected from the group consisting of polybutylene terephthalate, polypropylene, and polycarbonate, and most preferably polycarbonate.

The thermoplastic resin powder (b) of the present invention preferably has an average particle diameter of less than 500 μm, more preferably less than 450 μm, and most preferably less than 400 μm. The lower limit of the average particle diameter is not particularly limited, but is preferably 3 μm or more, more preferably 5 μm or more, and particularly preferably 10 μm or more.

The "average particle diameter" indicates a number average particle diameter. The average particle diameter is determined by observing arbitrary 50 particles of the thermoplastic resin under an electron microscope or an optical microscope, and calculating the average.

In the thermoplastic resin powder (b) of the present invention, particles of 300 μm or more preferably account for 20 mass% or less, and more preferably 15 mass% or less. In the thermoplastic resin powder (b), particles of 30 μm or more preferably account for 95 mass% or more. The above proportion can be measured in accordance with JIS Z8815.

The thermoplastic resin powder (b) of the present invention is not particularly limited in shape, and may be a ground powder (unspecified shape), spherical, pseudo-spherical (such as oval spherical), or polyhedral.

The method for producing the thermoplastic resin powder (b) of the present invention is not particularly limited. It is possible that the components are kneaded using various extruders, a Banbury mixer, a kneader, a roll, or the like, and the resulting product is formed into a powder using a grinder such as a turbo mill, a roller mill, a ball mill, a pin mill, a hammer mill, or a centrifugal grinder. At this time, the product may be cryo-ground using liquid nitrogen or the like, or may also be ground at ordinary temperature. The powder may also be classified as necessary. In addition, a thermoplastic resin obtained by polymerization may also be used, examples thereof including JP-A-2003-48972.

The compounded amount of the thermoplastic resin powder (b) is preferably 1 part by mass or more, more preferably 5 parts by mass or more, and particularly preferably 10 parts by mass or more, and is preferably 50 parts by mass or less, more preferably 30 parts by mass or less, and particularly preferably 25 parts by mass or less, relative to 100 parts by mass of the polyether-based polymer (a).

In the present invention, a crosslinking agent (c) is preferably further contained. Examples of the crosslinking agent (c) include a polyamine-based crosslinking agent, a thiourea-based crosslinking agent, a thiadiazole-based crosslinking agent, a mercaptotriazine-based crosslinking agent, a pyrazine-based crosslinking agent, a quinoxaline-based crosslinking agent, a bisphenol-based crosslinking agent, a peroxide-based crosslinking agent, and a sulfur-based crosslinking agent. The crosslinking agent (c) is preferably at least one selected from the group consisting of a thiourea-based crosslinking agent, a peroxide-based crosslinking agent, and a sulfur-based crosslinking agent, and particularly preferably a peroxide-based crosslinking agent.

Examples of the polyamine-based crosslinking agent include ethylenediamine, hexamethylenediamine, diethylenetriamine, triethylenetetramine, hexamethylenetetramine, p -phenylenediamine, cumenediamine, N,N'-dicinnamylidene-1,6-hexanediamine, ethylenediamine carbamate, and hexamethylenediamine carbamate.

Examples of the thiourea-based crosslinking agent include ethylene thiourea, 1,3-diethyl thiourea, 1,3-dibutyl thiourea, and trimethyl thiourea.

Examples of the thiadiazole-based crosslinking agent include 2,5-dimercapto-1,3,4-thiadiazole and 2-mercapto-1,3,4-thiadiazole-5-thiobenzoate.

Examples of the mercaptotriazine-based crosslinking agent include 2,4,6-trimercapto-1,3,5-triazine, 2-methoxy-4,6-dimercaptotriazine, 2-hexylamino-4,6-dimercaptotriazine, 2-diethylamino-4,6-dimercaptotriazine, 2-cyclohexaneamino-4,6-dimercaptotriazine, 2-dibutylamino-4,6-dimercaptotriazine, 2-anilino-4,6-dimercaptotriazine, and 2-phenylamino-4,6-dimercaptotriazine.

As the pyrazine-based crosslinking agent, 2,3-dimercaptopyrazine derivative and the like can be mentioned. Examples of the 2,3-dimercaptopyrazine derivative include pyrazine-2,3-dithiocarbonate, 5-methyl-2,3-dimercaptopyrazine, 5-ethylpyrazine-2,3-dithiocarbonate, 5,6-dimethyl-2,3-dimercaptopyrazine, and 5,6-dimethylpyrazine-2,3-dithiocarbonate.

As the quinoxaline-based crosslinking agent, 2,3-dimercaptoquinoxaline derivative and the like can be mentioned. Examples of the 2,3-dimercaptoquinoxaline derivative include quinoxaline-2,3-dithiocarbonate, 6-methylquinoxaline-2,3-dithiocarbonate, 6-ethyl-2,3-dimercaptoquinoxaline, 6-isopropylquinoxaline-2,3-dithiocarbonate, and 5,8-dimethylquinoxaline-2,3-dithiocarbonate.

Examples of the bisphenol-based crosslinking agent include 4,4'-dihydroxydiphenyl sulfoxide, 4,4'-dihydroxydiphenyl sulfone (bisphenol S), 1,1-cyclohexylidene-bis(4-hydroxybenzene), 2-chloro-1,4-cyclohexylene-bis(4-hydroxybenzene), 2,2-isopropylidene-bis(4-hydroxybenzene) (bisphenol A), hexafluoroisopropylidene-bis(4-hydroxybenzene) (bisphenol AF), and 2-fluoro-1,4-phenylene-bis(4-hydroxybenzene).

Examples of the peroxide-based crosslinking agent include tert-butyl hydroperoxide, p-menthane hydroperoxide, dicumyl peroxide, tert-butyl peroxide, 1,3-bis(tert-butylperoxyisopropyl)benzene, 2,5-dimethyl-2,5-di(tert-butylperoxy)hexane, benzoyl peroxide, tert-butyl peroxybenzoate, and 1,4-bis[(t-butylperoxy)isopropyl]benzene.

Examples of the sulfur-based crosslinking agent include sulfur, morpholine disulfide, tetramethylthiuram disulfide, tetraethylthiuram disulfide, tetrabuthylthiuram disulfide, N,N'-dimethyl-N,N'-diphenylthiuram disulfide, dipentanemethylenethiuram tetrasulfide, dipentamethylenethiuram tetrasulfide, and dipentamethylenethiuram hexasulfide.

The compounded amount of crosslinking agent (c) is preferably 0.1 parts by mass or more, and more preferably 0.3 parts by mass or more, and is preferably 10 parts by mass or less, and more preferably 5 parts by mass or less, relative to 100 parts by mass of the polyether-based polymer (a).

In the rubber composition of the present invention, a known crosslinking promoter for use with the crosslinking agent can be used. Examples of the crosslinking promoter include a sulfur compound such as sulfur, dipentamethylenethiuram tetrasulfide, and o,o'-dibenzamidodiphenyl disulfide, a polyfunctional monomer such as ethylene di(meth)acrylate, polyethylene di(meth)acrylate, divinylbenzene, diallylphthalate, triallylcyanurate, triallylisocyanurate, trimethylolpropane trimethacrylate, m-phenylenedimaleimide, and toluylene bismaleimide, and an oxime compound such as p-quinone oxime, p,p'-benzoylquinone oxime, and o,o'-dibenzoyl-p-quinone dioxime.

The content of the crosslinking promotor is preferably 0.1 to 15 parts by mass, more preferably 0.1 to 10 parts by mass, and particularly preferably 0.1 to 5 parts by mass, relative to 100 parts by mass of the polyether-based polymer (a).

In the resin-containing rubber composition of the present invention, in addition to those mentioned above, various compounding agents used in the technical field can be optionally compounded, unless the effects of the present invention are impaired. Examples of the compounding agent include an acid acceptor, a reinforcing agent, a filler, a plasticizer, a processing aid, an antioxidant, a lubricant, a flame retardant, and a pigment. Further, as long as the characteristic of the present invention is not lost, a resin other than the thermoplastic resin powder (b) can also be blended as usually performed in the technical field.

As the acid acceptor used in the present invention, a known acid acceptor can be used. The acid acceptor is preferably a metal compound and/or inorganic microporous crystal. Examples of the metal compound include oxides, hydroxides, carbonates, carboxylates, silicates, borates, and phosphites of metals in Group II (Group 2 and Group 12) of the Periodic Table; oxides, hydroxides, carboxylates, silicates, sulfates, nitrates, and phosphates of metals in Group III (Group 3 and Group 13) of the Periodic Table; and oxides, basic carbonates, basic carboxylates, basic phosphites, basic sulfites, and tribasic sulfates of metals in Group IV (Group 4 and Group 14) of the Periodic Table.

Specific examples of the metal compound include magnesia (magnesium oxide), magnesium hydroxide, aluminum hydroxide, barium hydroxide, sodium carbonate, magnesium carbonate, barium carbonate, quicklime, slaked lime, calcium carbonate, calcium silicate, calcium stearate, zinc stearate, calcium phthalate, calcium phosphite, zinc white, tin oxide, litharge, red lead, white lead, dibasic lead phthalate, dibasic lead carbonate, tin stearate, basic lead phosphite, basic tin phosphite, basic lead sulfite, and tribasic lead sulfate. Preferred are sodium carbonate, magnesia, magnesium hydroxide, quicklime, slaked lime, calcium silicate, and zinc white.

The inorganic microporous crystal means a crystalline porous body, which is clearly distinguishable from an amorphous porous body such as silica gel and alumina. Examples of the inorganic microporous crystal include a zeolite, an alumina phosphate type molecular sieve, a layered silicate, a synthetic hydrotalcite, and an alkali metal titanate. Particularly preferred inorganic microporous crystal includes a synthetic hydrotalcite.

Examples of the zeolite include various kinds of zeolite such as a natural zeolite, a synthetic zeolite of type A, X, and Y, a sodalite, a natural or synthetic mordenite, and a ZSM-5, and a metal substitute thereof. The zeolite may be used alone or in combination of two or more. A metal of the metal substitute is often sodium. The zeolite is preferably a zeolite having a large acid accepting capacity, more preferably type A zeolite.

The synthetic hydrotalcite is represented by the following general formula (1):

$$Mg_XZn_YAl_Z(OH)_{(2(X+Y)+3Z-2)}CO_3\cdot{}_WH_2O \qquad (1)$$

wherein X and Y each represent numbers of 0 to 10 having a relationship of X + Y = 1 to 10, Z represents a number of 1 to 5, and w represents a number of 0 to 10, respectively.

Examples of the hydrotalcite represented by the general formula (1) include $Mg_{4.5}Al_2(OH)_{13}CO_3\cdot 3.5H_2O$, $Mg_{4.5}Al_2(OH)_{13}CO_3$, $Mg_4Al_2(OH)_{12}CO_3\cdot 3.5H_2O$, $Mg_6Al_2(OH)_{16}CO_3\cdot 4H_2O$, $Mg_5Al_2(OH)_{14}CO_3\cdot 4H_2O$, $Mg_3Al_2(OH)_{10}CO_3\cdot 1.7H_2O$, $Mg_3ZnAl_2(OH)_{12}CO_3\cdot 3.5H_2O$, and $Mg_3ZnAl_2(OH)_{12}CO_3$.

The compounded amount of the acid acceptor is preferably 0.2 to 50 parts by mass, and more preferably 1 to 20 parts by mass, relative to 100 parts by mass of the polyether-based polymer (a).

As the filler, a known filler can be used. Specific examples of the filler include calcium carbonate, talc, silica, clay, carbon fibers, glass fibers, carbon black, titanium oxide, magnesium oxide, hydrotalcite, magnesium hydroxide, antimony oxide, and zinc oxide.

The compounded amount of the filler is preferably 10 to 100 parts by mass, and more preferably 20 to 80 parts by mass, relative to 100 parts by mass of the polyether-based polymer (a).

The filler used is preferably titanium oxide, silica, or the like, and particularly preferably is silica. The kind of silica is not particularly limited. Examples of silica include wet process silica (hydrous silicic acid), dry process silica (silicic acid anhydride), calcium silicate, and aluminum silicate. The silica used is preferably wet process silica. The wet process silica is fine particles of hydrous silicic acid, and is a silicon dioxide-based filler for rubbers. The hydrous silicic acid is produced, for example, by the acidolysis of an aqueous sodium silicate solution or an alkaline earth metal silicate.

The compounded amount of silica may be 10 to 100 parts by mass relative to 100 parts by mass of the polyether-based polymer (a), and is preferably 20 to 70 parts by mass.

In the resin-containing rubber composition of the present invention, a silane coupling agent may further be contained. The silane coupling agent is an organosilicon compound having two kinds of functional groups with different reactivities in a molecule. The silane coupling agent is preferably a compound represented by formula (2) or (3).

[Chemical 1]

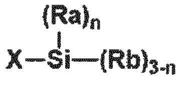

(2)

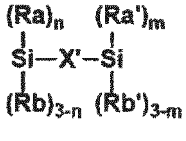

(3)

[In the formula, X is a reactive group,
X' is a hydrocarbon group optionally containing 1 to 10 sulfur atoms,
Ra and Ra' are each independently a hydrocarbon group,
Rb and Rb' are each independently a reactive group, and
n and m are each independently 0, 1, or 2.]

X is a reactive group that can form a chemical bond with an organic material. Examples of X include, but are not limited to, a vinyl group, a vinyl group-containing alkyl group, an epoxy group, an epoxy group-containing alkyl group, a glycidoxy group-containing alkyl group, a methacrylic group, a methacrylic group-containing alkyl group, a methacryloxy group, a methacryloxy group-containing alkyl group, an acrylic group, an acrylic group-containing alkyl group, an acryloxy group, an acryloxy group-containing alkyl group, an amino group, an amino group-containing alkyl group, a mercapto group, a mercapto group-containing alkyl group, and a chloroalkyl group. In the case where X has an alkyl group, the number of carbon atoms in the alkyl group may be 1 to 12. In the rubber material of the present invention, depending on the kind of organic material (rubber or resin), X does not necessarily have to form a chemical bond with the organic material.

Examples of X' include, but are not limited to, a polysulfide-containing hydrocarbon group having 1 to 20 carbon atoms, such as a polysulfide-containing alkylene group ($-Rc-S_x-Rc-$). -Rc- and x are, but not limited to, an alkylene group having 1 to 9 carbon atoms and an integer of 2 to 6, respectively.

Examples of Ra and Ra' include, but are not limited to, a hydrocarbon group having 1 to 12 carbon atoms such as an alkyl group.

Rb and Rb' are each a reactive group that can form a chemical bond with an inorganic material such as glass or metal. Examples of Rb and Rb' include, but are not limited to, an alkoxy group having 1 to 6 carbon atoms such as a methoxy group, an ethoxy group, a propoxy group, and a butoxy group.

Examples of the silane coupling agent include a vinyl-based silane coupling agent, an epoxy-based silane coupling agent, a methacrylic-based silane coupling agent, an acrylic-based silane coupling agent, an amino-based silane coupling agent, a mercapto-based silane coupling agent, a chloroalkyl-based silane coupling agent, and a polysulfide-based silane coupling agent. The silane coupling agents may be used alone or in combination of two or more.

Examples of the vinyl-based silane coupling agent include vinyltrimethoxysilane, vinyltriethoxysilane, vinyltris(2-methoxyethoxy) silane, allyltrichlorosilane, allyltrimethoxysilane, allyltriethoxysilane, diethoxymethylvinylsilane, trichlorovinylsilane, and triethoxyvinylsilane.

Examples of the epoxy-based silane coupling agent include 2-(3,4-epoxycyclohexyl)ethyltrimethoxysilane, 3-glycidoxypropyltrimetoxysilane, and 3-glycidoxypropyltriethoxysilane.

Examples of the methacrylic-based silane coupling agent include methacryloxymethyltrimethoxysilane, methacryloxymethyltriethoxysilane, methacryloxymethylmethyldimethoxysilane, methacryloxymethyldimethylmethoxysilane, γ-methacryloxypropyltrimethoxysilane, γ-methacryloxypropyltriethoxysilane, γ-methacryloxypropylmethyldimethoxysilane, γ-methacryloxypropylmethyldiethoxysilane, and γ-methacryloxypropyldimethylmethoxysilane.

Examples of the acrylic-based silane coupling agent include acryloxymethyltrimethoxysilane, acryloxymethyltriethoxysilane, acryloxymethylmethyldimethoxysilane, acryloxymethyldimethylmethoxysilane, γ-acryloxypropyltrimethoxysilane, γ-acryloxypropyltriethoxysilane, γ-acryloxypropylmethyldimethoxysilane, γ-acryloxypropylmethyldiethoxysilane, and γ-acryloxypropyldimethylmethoxysilane.

Examples of the amino-based silane coupling agent include 3-aminopropyltriethoxysilane, 3-aminopropyltrimethoxysilane, N-(2-aminoethyl)-3-aminopropyltrimethoxysilane, N-(2-aminoethyl)-3-aminopropylmethyldimethoxysilane, and 3-(N-phenyl)aminopropyltrimethoxysilane.

Examples of the mercapto-based silane coupling agent include 3-mercaptopropyltrimethoxysilane and 3-mercaptopropyltriethoxysilane.

Examples of the chloroalkyl-based silane coupling agent include trimethoxysilylpropyl chloride and triethoxysilylpropyl chloride.

As the polysulfide-based silane coupling agent, bis(3-triethoxysilylpropyl)disulfide (abbreviated to TESPD) and bis(3-triethoxysilylpropyl)tetrasulfide (abbreviated to TESPT) are preferable. Specific examples of the polysulfide-based silane coupling agent include "CABRUS 2A", "CABRUS 2B", and "CABRUS 4" (all manufactured by Osaka Soda Co., Ltd.), "Si75" and "Si69" (manufactured by Degussa), "A-1289" (manufactured by GE Silicones), and "KBE-846" (manufactured by Shin-Etsu Chemical Co., Ltd.).

In the resin-containing rubber composition of the present invention, the silane coupling agent is preferably used in combination with silica as the filler. The content of the silane coupling agent may be 0.5 to 25 parts by mass, and is preferably 1 to 20 parts by mass, relative to 100 parts by mass of silica.

In the resin-containing rubber composition of the present invention, it is also possible to use surface-treated silica obtained by surface-treating silica with the above silane coupling agent.

As a method for producing surface-treated silica, it is preferable that 3 to 15 parts by weight, preferably 5 to 13 parts by weight, of a silane coupling agent is reacted with relative to 100 parts by weight of silica.

In the method for producing surface-treated silica, an acid or the like can be used to promote the reaction between silica and the silane coupling agent.

The method for producing surface-treated silica may comprise a heating treatment in order to further promote the reaction between silica and the silane coupling agent, and the heating method, time, and temperature are not particularly limited. Specifically, for example, it is possible that heating and stirring are performed using a Nauta mixer, a ribbon blender, or a Henschel mixer, followed by heating in a heating oven. The stirring temperature and time are generally 20 to 200°C and 1 minute to 24 hours, respectively.

The compounded amount of the surface-treated silica may be 10 to 100 parts by mass, and is preferably 20 to 70 parts by mass, relative to 100 parts by mass of the polyether-based polymer (a).

In the resin-containing rubber composition of the present invention, a known antiaging agent can be used. Examples of the known antiaging agent include an amine-based antiaging agent, a phenol-based antiaging agent, a benzimidazole-based antiaging agent, a dithiocarbamate-based antiaging agent, a thiourea-based antiaging agent, an organic thioic acid-based antiaging agent, and a phosphorus acid-based antiaging agent. The antiaging agent is preferably dithiocarbamate-based antiaging agent.

Specific examples of the dithiocarbamate-based antiaging agent include nickel diethyldithiocarbamate, nickel dimethyldithiocarbamate, nickel dibutyldithiocarbamate, nickel diisobutyldithiocarbamate, copper dimethyldithiocarbamate, copper diethyldithiocarbamate, copper dibutyldithiocarbamate, copper N-ethyl-N-phenyldithiocarbamate, copper N-pentamethylenedithiocarbamate, and copper dibenzyldithiocarbamate.

In the resin-containing rubber composition of the present invention, the compounded amount of the antiaging agent is preferably 0.1 to 10 parts by mass, more preferably 0.1 to 5 parts by mass, and particularly preferably 0.3 to 3 parts by mass, relative to 100 parts by mass of the polyether-based polymer (a).

Specific examples of the lubricant include paraffins and hydrocarbon resins such as paraffin wax and a hydrocarbon wax; fatty acids such as stearic acid and palmitic acid; fatty acid amides such as stearamide and oleyl amide; fatty acid esters such as n-butyl stearate; sorbitan fatty acid esters; and fatty alcohols. These lubricants may be used alone or in combination of two or more.

The compounded amount of the lubricant is preferably 0.1 to 20 parts by mass, and more preferably 0.1 to 10 parts by mass, relative to 100 parts by mass of the polyether-based polymer (a).

Examples of the plasticizer include a phthalic acid derivative such as dioctyl phthalate (bis(2-ethylhexyl) phthalate) and diallyl phthalate, an adipic acid derivative such as dibutyldiglycol adipate and di(butoxyethoxy) ethyl adipate, a sebacic acid derivative such as dioctyl sebacate, and a trimellitic acid derivative such as trioctyl trimellitate. These plasticizers may be used alone or in combination of two or more. The plasticizer is preferably a phthalic acid derivative.

The compounded amount of the plasticizer is preferably 0.1 to 50 parts by mass, and more preferably 0.1 to 20 parts by mass, relative to 100 parts by mass of the polyether-based polymer (a).

As a compounding method for the resin-containing rubber composition of the present invention, an arbitrary technique conventionally utilized in the field of polymer processing can be used. For example, kneading can be performed using a mixing roll, a Banbury mixer, or various kneaders. Examples of molding methods include compression molding in a mold, extrusion molding, and injection molding.

The kneading temperature is preferably equal to or lower than the melting point of the thermoplastic resin powder (b). When the kneading temperature is equal to or lower than the melting point of the thermoplastic resin powder (b), the resin powder is unlikely to melt during kneading, and the aggregation of the resin powder can be suppressed. Consequently, the resulting rubber material has improved tensile stress. The kneading temperature is more preferably 5°C or more lower than the melting point of the thermoplastic resin powder (b), and still more preferably 10 °C or more lower than the melting point of the thermoplastic resin powder (b). The lower limit of the kneading temperature is not particularly limited, but is 30°C, for example, and preferably 50°C. Further, the lower limit of the kneading temperature may be changed according to the compounding stage of the resin-containing rubber composition. For example, in the case where the polyether-based polymer (a) and the thermoplastic resin powder (b) are kneaded, and then the crosslinking agent is added and kneaded, preferably in the case where the polyether-based polymer (a) and the thermoplastic resin powder (b) are kneaded together with silica and the silane coupling agent, the lower limit of the temperature of kneading the polyether-based polymer (a), thermoplastic resin powder (b), silica, and silane coupling agent may be preferably 60°C or more, and more preferably 90°C or more.

The kneading time is not particularly limited, and is 1 minute to 3 hours, for example.

The rubber material using the rubber composition of the present invention is preferably obtained through crosslinking. Specifically, usually, the rubber material is obtained by heating at 100 to 200°C. The crosslinking time varies depending on the temperature and is usually 0.5 to 300 minutes. As a crosslink-molding method, an arbitrary method such as compression molding in a mold, injection molding, or heating in an air bath, with infrared radiation, or in a microwave can be used.

The 100% modulus ($M_{100}$) of the rubber material of the present invention in a 23°C environment is preferably 6.0 MPa or more, more preferably 6.5 MPa or more, still more preferably 7.0 MPa or more, particularly preferably 7.5

MPa or more, and most preferably 8.0 MPa or more. The upper limit is not particularly set, but is 10 MPa or less, for example.

The $M_{100}$ of the rubber material of the present invention in a 100°C environment is preferably 5.5 MPa or more, more preferably 5.7 MPa or more, still more preferably 6.0 MPa or more, and particularly preferably 6.5 MPa or more. The upper limit is not particularly set, but is 10 MPa or less, for example. Incidentally, $M_{100}$ in a 23°C environment and a 100°C environment can be measured in accordance with JIS K6250 and JIS K6251.

This application claims benefit of priority based on Japanese Patent Application No. 2018-155242 filed on August 22, 2018. The entire content of the specification of Japanese Patent Application No. 2018-155242 filed on August 22, 2018 is incorporated herein by reference.

## EXAMPLES

Hereinbelow, the present invention will be more specifically described in examples and comparative examples, but the present invention is not limited to these descriptions.

First, the compounding agents shown in Table 1 were kneaded in a Banbury mixer at 120°C to prepare a kneaded compound A. Kneading blending agents B were added to the kneaded compound A and kneaded in an open roll at 50°C for about 5 minutes to prepare a kneaded compound B. The productive compound was pressed by a pressing machine set at 170°C for 15 minutes to prepare a test piece. A in the table shows raw materials for the kneaded compound A, and B shows raw material to be compounded with a kneaded compound A in the preparation of a kneaded compound B. The unit regarding the compounding agents in Table 1 is parts by mass.

The compounding agents used in the examples and comparative examples are as follows.

*1: Epichlorohydrin-ethylene oxide-allyl glycidyl ether terpolymer "EPICHLOMER CG-105" manufactured by Osaka Soda Co., Ltd.
*2: "Panlite L-1250Y (melting point: 144°C)" manufactured by Teijin Limited, cryo-ground product, average particle diameter: 30 μm
*3: "NOBLEN H501 (melting point: 159°C)" manufactured by Sumitomo Chemical Co., Ltd., cryo-ground product, average particle diameter: 330 μm
*4: "DURANEX 2000 (melting point: 223°C)" manufactured by Polyplastics Co., Ltd., cryo-ground product, average particle diameter: 180 μm
*5: "Nipsil VN3" manufactured by Tosoh Silica Corporation
*6: "R-820" manufactured by Ishihara Sangyo Kaisha Ltd.
*7: "CABRUS C" manufactured by Osaka Soda Co., Ltd.
*8: "NOCRAC NBC" manufactured by Ouchi Shinko Chemical Industrial Co., Ltd.
*9: "SPLENDER R-300V" manufactured by Kao Corporation
*10: "Kyowamag 150" manufactured by Kyowa Chemical Industry Co., Ltd.
*11: "DAISO DAP Monomer" manufactured by Osaka Soda Co., Ltd.
*12: "PERBUTYL P" manufactured by NOF Corporation
*13: "VULNOC PM" manufactured by Ouchi Shinko Chemical Industrial Co., Ltd.
*14: "NOCTIZER SS" manufactured by Ouchi Shinko Chemical Industrial Co., Ltd.
*15: "ACCEL 22S" manufactured by Kawaguchi Chemical Industry Co., Ltd.
*16: "Panlite L-1250Y" manufactured by Teijin Limited, pellet shape, 3 mm

[Table 1]

| | raw materials | Example 1 | Example 2 | Example 3 | Example 4 | Comparative example 1 | Comparative example 2 |
|---|---|---|---|---|---|---|---|
| A | polyether-based polymer *1 | 85 | 85 | 85 | 85 | 100 | 85 |
| | polycarbonate powder *2 | 15 | 15 | | | | |
| | polypropylene powder *3 | | | 15 | | | |
| | polybutylene terephthalate powder *4 | | | | 15 | | |
| | polycarbonate resin *16 | | | | | | 15 |
| | silica *5 (filler) | 50 | 50 | 50 | 50 | 50 | 50 |
| | titanium oxide *6 (filler) | 5 | 5 | 5 | 5 | 5 | 5 |
| | triethoxysilylpropyl chloride *7 (silane coupling agent) | 5 | 5 | 5 | 5 | 5 | 5 |
| | nickel dibutyldithiocarbamate *8 (antiaging agent) | 1 | 1 | 1 | 1 | 1 | 1 |
| | fatty acid ester *9 (lubricant) | 3 | 3 | 3 | 3 | 3 | 3 |
| | magnesium oxide *10 (acid acceptor) | 10 | 10 | 10 | 10 | 10 | 10 |
| | diallyl phthalate *11 (plasticizer) | 10 | 10 | 10 | 10 | 10 | 10 |
| B | 1,4-bis[(t-butylperoxy) isopropyl]benzene *12 (crosslinking agent) | 1.0 | | | | 1.0 | 1.0 |
| | m-phenylenedimaleimide *13 (crosslinking promoter) | 1.5 | | | | 1.5 | 1.5 |
| | o,o'-dibenzamidodiphenyl disulfide *14 (crosslinking promoter) | | 0.5 | 0.5 | 0.5 | | |
| | sulfur (crosslinking promoter) | | 0.3 | 0.3 | 0.3 | | |
| | ethylene thiourea *15 (crosslinking agent) | | 2.0 | 2.0 | 2.0 | | |

[Method for Producing Resin Powder]

Using a cryo-grinder(freezing crusher) JFC2000 manufactured by Japan Industry Co., Ltd., each resin was pre-cooled with liquid nitrogen for 10 minutes and then ground for 10 minutes.

[Measurement of Melting Point of Resin Powder]

Using DSC8000 manufactured by PerkinElmer Co., Ltd., the temperature was raised at 10°C/min from 20°C to 300°C to measure the melting point.

[Measurement Method for Average Particle Diameter of Resin Powder]

Using a digital microscope VHX-6000 manufactured by KEYENCE Corporation, arbitrary 50 particles of a thermoplastic resin were observed, and the average was calculated to determine the average particle diameter.

[Resin Powder Sieve Test]

In accordance with JIS Z8815, each resin powder used in the examples was subjected to a sieve test. 100 g of a powder was prepared and classified using a low-tap sieve shaker manufactured by Tanaka Tec Co., Ltd. The results are shown in Table 2. Incidentally, the oversize mass fraction in Table 2 was determined from the following formula.

$$R = m/T \times 100$$

R: Oversize mass fraction (%)
m: Oversize mass (g)
T: Test sample mass (g)

[Table 2]

| polycarbonate powder | | | | | |
|---|---|---|---|---|---|
| opening of sieve (μm) | 63 | 45 | 38 | 32 | 25 |
| oversize mass fraction (%) | 1.7 | 58.6 | 36.6 | 2.4 | 0.7 |
| polypropylene powder | | | | | |
| opening of sieve (μm) | 300 | 212 | 180 | 150 | 125 |
| oversize mass fraction (%) | 11.8 | 41.6 | 13.3 | 18.9 | 14.3 |
| polybutylene terephthalate powder | | | | | |
| opening of sieve (μm) | 150 | 125 | 100 | 75 | 38 |
| oversize mass fraction (%) | 16.2 | 18.2 | 33.9 | 16.0 | 15.6 |

[Normal-State Physical Properties, Hot Physical Properties]

In accordance with JIS K6250 and JIS K6251, a tensile tests were performed in a 23°C environment and a 100°C environment. In the table, 100% modulus ($M_{100}$), TB, and EB mean stress at 100% elongation, strength defined in the tensile test of JIS K6251, and elongation defined in the tensile test of JIS K6251, respectively. Incidentally, physical properties in a 23°C environment are referred to as normal-state physical properties, and physical properties in a 100°C environment are referred to as hot physical properties.

The test results of the examples and the comparative examples obtained by each test method are shown in Table 3. Incidentally, in Comparative Example 2, non-productive mixing using a Banbury mixer resulted in poor dispersion, making it impossible to perform productive mixing and molding.

[Table 3]

| | Example 1 | Example 2 | Example 3 | Example 4 | Comparative example 1 |
|---|---|---|---|---|---|
| <normal-state physical properties> | | | | | |
| $M_{100}$ (MPa) | 8.9 | 7.0 | 6.8 | 6.9 | 5.5 |
| TB (MPa) | 11.4 | 18.7 | 11.3 | 13.6 | 12.0 |
| EB (%) | 195 | 320 | 185 | 215 | 280 |
| <hot physical properties> in a 100°C environment | | | | | |
| $M_{100}$ (MPa) | 7.0 | 5.6 | 5.7 | 5.7 | 5.4 |

(continued)

| <hot physical properties> in a 100°C environment | | | | | |
|---|---|---|---|---|---|
| TB (MPa) | 7.3 | 9.8 | 5.8 | 6.8 | 6.5 |
| EB (%) | 115 | 185 | 105 | 120 | 135 |

As shown in Table 3, it was shown that the materials of Examples 1 to 4 had excellent tensile stress ($M_{100}$) in normal-state physical properties and hot physical properties. In particular, Example 1 using a peroxide-based crosslinking agent gave particularly favorable results in terms of tensile stress both in normal-state physical properties and hot physical properties.

INDUSTRIAL APPLICABILITY

The rubber composition of the present invention has excellent tensile stress in normal-state physical properties and hot physical properties, and thus is widely applicable as fuel hose, air-system hose, and tube materials for automotive applications, semi-conductive rollers and belts for developing, charging, transfer, and the like in the electrophotographic process for OA applications such as copiers and printers, and also covering tubes for electric wires.

**Claims**

**1.** A resin-containing rubber composition comprising a polyether-based polymer (a) and a thermoplastic resin powder (b).

**2.** The resin-containing rubber composition according to claim 1, wherein the thermoplastic resin powder (b) has an average particle diameter of less than 500 μm.

**3.** The resin-containing rubber composition according to claim 1 or 2, wherein in the thermoplastic resin powder (b), particles of 300 μm or more account for 20 mass% or less.

**4.** The resin-containing rubber composition according to any one of claims 1 to 3, further comprising a crosslinking agent (c).

**5.** The resin-containing rubber composition according to any one of claims 1 to 4, wherein the polyether-based polymer (a) contains, as structural units, at least two units selected from ethylene oxide unit, propylene oxide unit, epichlorohydrin unit, and allyl glycidyl ether unit.

**6.** The resin-containing rubber composition according to any one of claims 1 to 5, wherein the thermoplastic resin powder (b) has a melting point of 120°C or more.

**7.** The resin-containing rubber composition according to any one of claims 4 to 6, wherein the crosslinking agent (c) is at least one selected from the group consisting of a polyamine-based crosslinking agent, a thiourea-based crosslinking agent, a thiadiazole-based crosslinking agent, a mercaptotriazine-based crosslinking agent, a pyrazine-based crosslinking agent, a quinoxaline-based crosslinking agent, a bisphenol-based crosslinking agent, a peroxide-based crosslinking agent, and a sulfur-based crosslinking agent.

**8.** A rubber material made from the resin-containing rubber composition according to any one of claims 1 to 7.

**9.** A method for producing the resin-containing rubber composition according to any one of claims 1 to 7, the method comprising kneading the polyether-based polymer (a) and the thermoplastic resin powder (b) at a temperature equal to or lower than a melting point of the thermoplastic resin powder (b).

## INTERNATIONAL SEARCH REPORT

International application No.
PCT/JP2019/032681

A. CLASSIFICATION OF SUBJECT MATTER
Int.Cl. C08L71/00(2006.01)i, C08K3/011(2018.01)i, C08K3/06(2006.01)i, C08K5/14(2006.01)i, C08L71/03(2006.01)i, C08L101/00(2006.01)i

According to International Patent Classification (IPC) or to both national classification and IPC

B. FIELDS SEARCHED
Minimum documentation searched (classification system followed by classification symbols)
Int.Cl. C08L71/00, C08K3/011, C08K3/06, C08K5/14, C08L71/03, C08L101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2014-126680 A (CANON INC.) 07 July 2014, claims, paragraphs [0042], [0049], examples (Family: none) | 1-5, 7-9<br>6 |
| X<br>A | JP 2012-194334 A (CANON INC.) 11 October 2012, claims, paragraphs [0029], [0030], [0042], examples (Family: none) | 1-5, 7-8<br>6, 9 |
| X<br>A | JP 2013-18880 A (OLYMPUS CORPORATION) 31 January 2013, claims, paragraph [0025], comparative example 6 & US 2014/0039417 A1, claims, paragraph [0050], comparative example 6 & CN 103476851 A | 1-3, 6, 8<br>4-5, 7, 9 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04.10.2019 | 15.10.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/032681

C (Continuation). DOCUMENTS CONSIDERED TO BE RELEVANT

| Category* | Citation of document, with indication, where appropriate, of the relevant passages | Relevant to claim No. |
|---|---|---|
| A | JP 60-55041 A (SEITETSU KAGAKU CO., LTD.) 29 March 1985 & EP 179937 A1 | 1-9 |
| A | JP 61-111347 A (CHEMISCHE WERKE HUELS AKTIENGESELLSCHAFT) 29 May 1986 & US 4690970 A & EP 168566 A1 | 1-9 |
| A | JP 2008-59976 A (AUTONETWORKS TECHNOLOGIES LTD.) 13 March 2008 & US 2009/0255708 A1 | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015133610 A
- JP 2003048972 A
- JP 2018155242 A